# EUROPEAN PATENT SPECIFICATION

(11) **EP 0 705 536 B1**
(45) Date of publication and mention of the grant of the patent: **14.01.1998**
(21) Application number: 95202658.1
(22) Date of filing: 03.10.1995
(51) Int. Cl.: A01K 29/00

(54) **Activity detector with position-dependent movement sensor**
Aktivitätsdetektor mit positionsabhängigem Bewegungssensor
Détecteur d'activité avec capteur de mouvement dépendant de la position

(30) Priority: 03.10.1994 NL 9401617
(43) Date of publication of application: 10.04.1996
(73) Proprietor: N.V. Nederlandsche Apparatenfabriek NEDAP, NL-7141 DE Groenlo (NL)
(72) Inventor: Roosenschoon, Pieter Lieuwe, NL-7104 BC Meddo (NL); Harmsen, Jan Hendrik, NL-7255 BJ Hengelo (NL)
(74) Representative: Smulders, Theodorus A.H.J., Ir.

(56) References cited:
- EP-A- 0 087 015
- EP-A- 0 406 978
- NL-A- 7 711 891
- US-A- 4 051 397
- US-A- 4 234 876
- US-A- 4 247 758
- US-A- 4 618 861

## Description

This invention relates to a method and device by which the activity level of animals, such as for instance cows and the like, can be measured, the main objective being to determine reliably and automatically the period of heat (estrus), which is characterized by additional activity.

Such heat detection devices are known from practice and from the patent literature. Relevant references are, for instance, U.S. Patent 4,247,758 (Rodrian) and U.S. Patent 4,618,861 (Gettens). These disclose an activity detector attached to the animal, which is mostly built together with a radiographic identification device, known per se, such as for instance disclosed in applicant's Dutch Patent No. 176404.

The activity detector contains a movement sensor, which counts the number of movements (= activity) of the animal, which number, simultaneously with the unique identification code of the animal, is transmitted wirelessly to a reading device arranged at a point which the animal passes regularly, for instance at the entrance of the milking parlor. Now, via the reading device it is possible to keep a continuous record of the number of movements per unit time (= activity level) of each individual animal in a management computer. A clear increase of this activity level coinciding with the heat time frame to be programmed for each animal after one or more periods of heat, points of the actual occurrence of hear. If such deviant activity falls outside the time frame referred to, this may be an indication of disease, which is also an important management aspect for the cattle farmer.

It has been found that the measured activity not only depends on the construction of the activity detector but also depends strongly on the site where the detector is attached to the animal. The site of choice should be a site where the movement intensity of the animal is strongly related to heat and as little as possible to the movements which the animal normally makes anyway. Such a site is for instance a leg, directly above the hoof. It is precisely this site, however, that has substantial disadvantages. Fouling by manure and mud can give rise to infections in the lower leg. Further, the interrogating antenna of the readout device must then be arranged on or under the stable floor, which may give to interference due to wear and moisture. Moreover it is more difficult to arange. Also, this site is unfavourable in respect of the detection of the animal number for the purpose of automatic animal feed systems.

A much more favourable site would be the underside of the animal's neck, with the activity detector, together with the identification code transmitter, being attached to a collar in conventional manner. The use of such a collar is moreover preferred for the attachment of animal numbers for visual recognition.

The U.S. patents referred to also mention the neck as a point of attachment of the detector. Compared with the attachment of the detector to the leg, however, this site has been found to have a major disadvantage. In addition to the movements resulting from heat (estrus), many other movements occur at this point, the most important among them relating to eating. The normal activity level measured at the neck has been found to be so high that the additional peaks resulting from heat are less significantly detectable. In other words, the "signal to noise ratio" is poor.

EP-A-0087015 discloses an estrus detection tag and a method for measuring the activity level of an animal. The known tag comprises a movement sensor and an electronic counting circuit and the sensitivity of the movement sensor is dependent on the position of the movement sensor. This known tag too is designed for attachment to the hind leg of a cow and also has a poor signal-to-noise ratio.

Accordingly, the object of the present invention is to suppress to a considerable extent the "noise" resulting from normal activity to thereby enable reliable observation of the true heat signal.

In accordance with the present invention a method for measuring the activity level of an animal using a device fitted in or on the animal, comprising a movement sensor and an electronic counting circuit, wherein use is made of a movement sensor whose sensitivity is dependent on the position of the movement sensor is characterized in that it is determined which type of movements is significant for the purpose of the measurement; that the movement sensor is fitted in or on the animal in such a manner that the highest sensitivity of the movement sensor occurs in the spatial area or in a direction in which the movements significant for the measuring purpose occur. A device for measuring the activity level of an animal, comprising a movement sensor and an electronic counting circuit, wherein the movement sensor is of the type whose sensitivity is dependent on the position of the movement sensor in space is characterized in that the movement sensor is mounted in the device in such a manner that the movement sensor assumes the sensitive position during movements that are relevant for the measuring purpose and an insensitive position during other movements if the device is fitted on or in the animal.

Hereinafter the invention will be further explained with reference to the accompanying drawings.
Fig. 1 diagrammatically illustrates the basic concept of the invention;
Fig. 2 diagrammatically shows in top plan view and in vertical cross section in different positions an example of a movement sensor suitable for the practice of the invention;
Fig. 3 diagrammatically shows in cross section another example of a suitable movement sensor in two positions;
Fig. 4 diagrammatically shows in cross section still another example of a movement sensor suitable for the practice of the invention in two positions;
Fig. 5 diagrammatically shows in longitudinal section a variant of Fig. 4; and
Fig. 6 diagrammatically shows an example of an activity detector according to the invention, comprising a movement sensor.

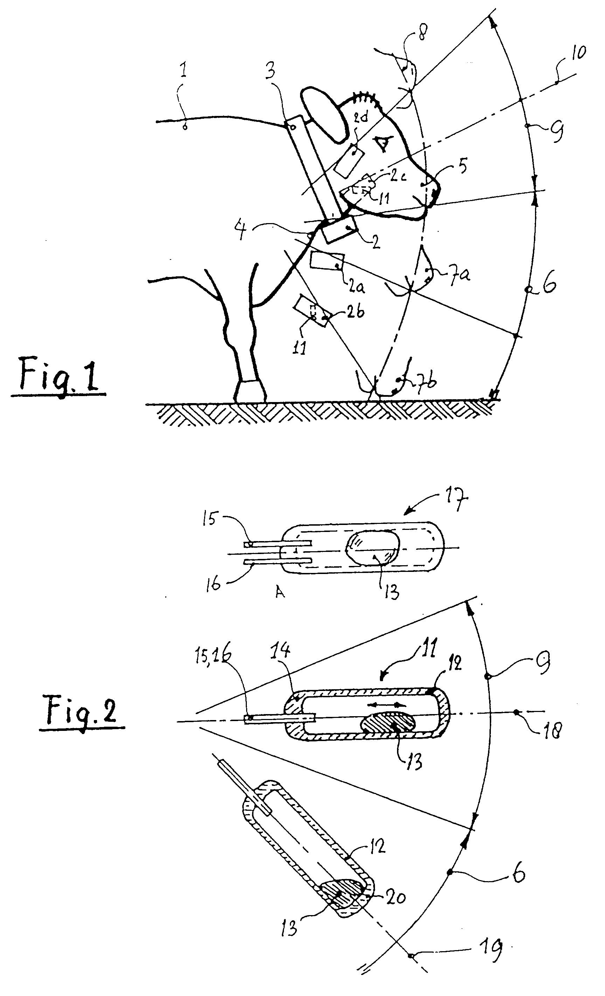

Fig. 1 shows the normal position of an animal, in this case a cow 1, when it is not eating. The activity detector 2, which often also contains the necessary identification electronics, hangs from a collar 3 around the cow's neck and assumes with some clearance a position corresponding with the underside of the neck 4. When the head 5 moves up and down, the activity detector 2 follows the movement of the head inasmuch as the neck 4 moves with it. A movement that normally occurs frequently is naturally the movement performed by the animal when eating. The magnitude of the eating movement, indicated by range 6, varies with the location of the feed in a trough (level 7a) or on the ground (level 7b), respectively. Investigations have shown that during heat the animal frequently moves its head from the normal position in upward direction (position 8), leading to the associated activity detector position 2d. The "heat movement" is indicated by range or angle 9. Now the object of the invention is to construct the activity detector 2, in which the number of movements is counted, in such a manner that, to the largest possible extent, it observes exclusively the heat movement 9 and not the eating movement 6. To that end, use is made of the above-mentioned fact that the activity detector follows the movement of the head and assumes, respectively, eating movement positions 2, 2a and 2b, and heat movement positions 2, 2c, 2d. In the drawing it is clear to see that the activity detector makes a tilting movement. In accordance with the invention, this fact is put to use by the incorporation of a movement sensor 11 whose sensitivity is dependent on its spatial position, the position in which the sensor is built into the activity detector being chosen such that the maximum sensitivity arises during the heat movement, preferably around the average heat angle 10.

Fig. 2 diagrammatically shows an example of a known position-dependent sensor 11 useful for this purpose. It comprises a glass tube 12, closed at both ends, in which a drop of mercury 13 is contained. In the bottom 14 of the tube, two metal electrodes 15 and 16 are melted in (see also the top plan view of Fig. 2 at 17). Tube 12 is filled with an inert gas to prevent oxidation of the mercury and the electrodes and hence to ensure good contact between the mercury 13 and the electrodes 15 and 16 when the mercury drop touches these electrodes. It will be clear that the sensitivity of the sensor in respect of accelerations and angular displacements occurring during movements of the sensor is highest when it is at rest in the horizontal position 18. It is then easiest for the mercury drop 13 to move within tube 12 and hence contact the electrodes 15 and 16. The electrodes are then electrically through-connected, so that a current surge (= count) is generated from a battery or other power source built into the activity detector to a likewise built-in electronic counter.

During radiographic readout of the activity detector, the counter position (together with the identification code) is transmitted in known manner to the readout device. Now, according to the invention, the sensor 11 is mounted in the activity detector 2 (see Fig. 1) in such a manner that it assumes its most sensitive (i.e. horizontal) position 18 at the average heat angle 10 of the animal's head (see position 2c in Fig. 1). In Fig. 1 it can also be seen that the magnitude of the angular movement of sensor 2 within the heat movement corresponds with range 9. The angle of the eating movement 6 therefore lies outside this range. The sensor 11 is then situated, for instance, in position 19 (Fig. 2), where mercury drop 13 is disposed at the bottom 20 of tube 12, remote from the electrodes, and can only contact the electrodes 15 and 16 as a result of extremely strong movements. What is thus achieved in accordance with the invention is that within the eating movement 6 the sensor is as insensitive as possible and so transmits no or few undesired pulses with respect to the heat movement pulses to be counted. So this produces the desired effect of a low "noise" level, i.e. few pulses resulting from other movements than those caused by heat.

Although the above-described movement sensor with mercury drop is quite satisfactory, there are yet some drawbacks associated with it:
(a) Mercury is harmful to the environment and
(b) In the activity detector an energy source is necessary, in the form of a battery, which has a limited life and which may also be harmful to the environment.

Drawback (a) can be remedied by the use of a different, likewise known, type of position-dependent switch, in which the mercury has been replaced by a metal ball.

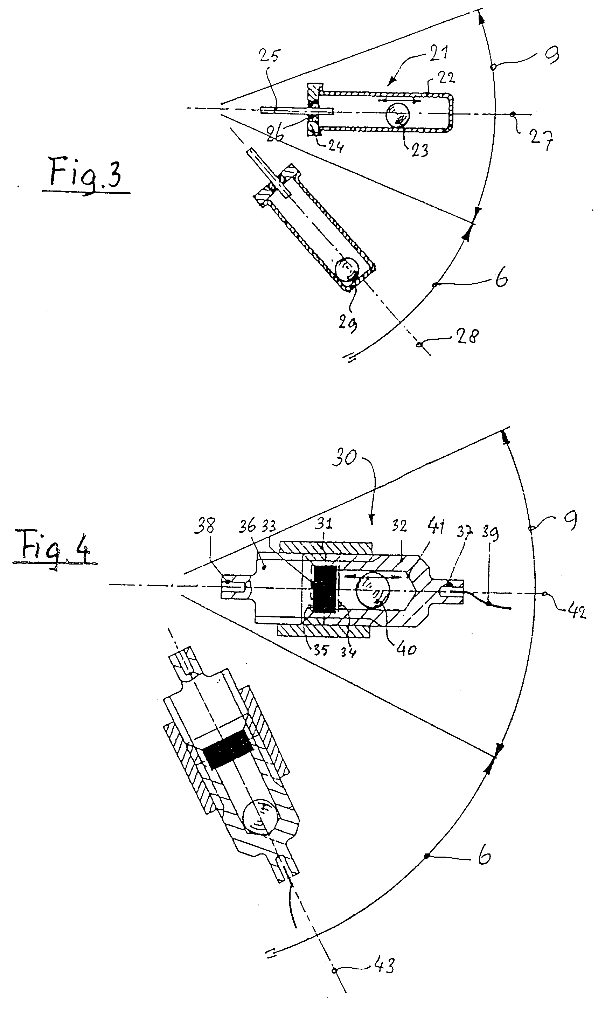

Fig. 3 diagrammatically shows an example of such a ball switch. A metal housing 22, gilt on the inside in this example, contains one or more loose, likewise gilt, ball(s) 23. The housing 22 is closed off with a flange 24 in which a gilt contact pin is secured through an insulating, for instance glass, ring 26. When ball 23 rolls against pin 25, electrical contact is made between housing 22 and pin 25, so that in the manner described with reference to the mercury switch 11 of Fig. 2, via a battery or different power source a current surge can be supplied to an electronic counter. Here too the horizontal position 27 is the most sensitive position again and so, in accordance with the invention, the ball switch 21 is mounted in such a manner that the horizontal position is located approximately in the middle of the heat angle 9. When the switch tilts into the "eating angle" 6, for instance to position 28, the ball 23 is disposed at the lower end of the housing, against the bottom 29 thereof and is then much more insensitive to movements, whereby the object of the invention is achieved, that is, enabling clear observation of the heat movement, as described with reference to Fig. 2.

Yet, the above-mentioned disadvantage of a power source (for instance a battery) which must necessarily be built in, remains.

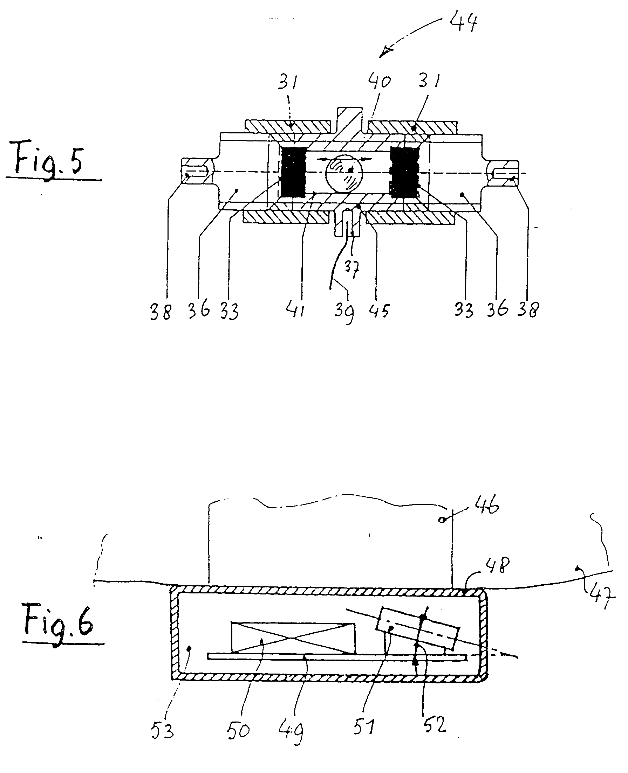

To remove this drawback, in accordance with the invention a sensor with position-dependent sensitivity can be designed as shown in Figs. 4 and 5.

Fig. 4 shows a simple design of a sensor 30 with position-dependent sensitivity according to the invention. Screwed into an internally threaded sleeve 31 of insulating material is a metal tube 32 closed on one side. The open side of housing 32 is sealed by a, for instance plate-shaped, element 33 of piezoelectric material, which in known manner is provided on both sides thereof with metallic layers 34 and 35, which function as electrodes.

Plate 33 is confined by a screwed-in metal plug 36. Housing 32 and plug 36 are each provided with an electrical terminal 37 and 38 in which an electrical connecting wire such as 39 can be fitted. Located within housing 32 is a ball 40 which, at least in the longitudinal direction of the tube, can roll freely within the cavity 41 of the housing. Now, when ball 40 butts against piezo element 33, a part of the kinetic energy of the mass of the ball 40 is converted into electrical energy and an electrical voltage pulse arises across the metallic layers (electrodes) 34 and 35. This voltage pulse can control an electronic counter in the activity detector, without necessitating an other energy source (battery) for forming the pulses. Depending on the piezo material and sensor dimensions chosen, even all of the energy needed for the electronics can be derived from the piezoelectric element, eliminating the necessity for a battery in the activity detector. To that end, use can be made, for instance, of a reservoir capacitor.

As described in relation to the mercury drop sensor in Fig. 2 and the ball sensor in Fig. 3, with the piezo sensor the sensitivity to movements is highest when the direction of its axis 42 is horizontal and lowest when a more vertical position as indicated at 43 is assumed.

Accordingly, when the piezo sensor is used for the purpose of the present invention, the mounted position of the sensor 30 within the activity detector will again have to be such that the most sensitive axial direction 42 falls within the heat angle 9 and the insensitive axial direction 43 within the eating angle 6. Then the desired distinction between counts during heat and during eating, respectively, in accordance with the invention, will be maximal.

Fig. 5 shows an example of another embodiment 44 of a piezo sensor according to the invention. The operation of sensor 44 is basically the same as that of sensor 30 of Fig. 4, the difference being that now two piezo elements 33 are arranged. To that end, a metal sleeve 45, which is secured in an insulating jacket 31 again, is open at both ends. The openings are now both covered by two piezo elements 33 which are each pressed down by a metal plug 36. Sleeve 45 and plugs 36 are mounted, for instance by means of a screwed connection, in sleeves 31 of insulating material. Electrical connections such as 39 can be made via the terminals 37 and 38. Here too the sensitivity of the sensor to movements is highest again in horizontal position and lowest in vertical position. Further, it is mounted in the activity detector in the manner described with reference to Fig. 4 and it also operates in the same way, except that the number of pulses during the heat movement 9, as indicated in Fig. 4, is now doubled, as is the electrical energy to be derived from the sensor. This renders it easier to avoid the necessity of an electrical energy source in the activity detector and the desired difference in sensitivity to heat and eating movements becomes even greater.

Fig. 6 diagrammatically shows an example of the cross section of an activity detector 2 according to the invention as shown in Fig. 1. Arranged within the activity detector housing 48, attached to the cow's neck 47 for instance by means of a collar, is a printed circuit board 49 on which the electronics and, if necessary, a battery 50 are mounted, in addition to the movement sensor 51. The angle 52 at which sensor 51 is disposed, is chosen in accordance with the invention, such that the sensor extends horizontally at the average angle 10 of the heat movement 9 (see Fig. 1).

In a practical embodiment, it appears that, for instance in cows, this angle must be about 20 degrees to achieve maximum distinction between the heat movements and the eating movements.

The space between housing 48 and the built-in components can be filled up with a setting encapsulating compound 53, so that the components are fixed and protected against moisture and other environmental influences.

It is observed that after the foregoing, various modifications will readily occur to those skilled in the art. For instance, in Fig. 5 a metal sleeve is utilized, which comprises a central ridge which constitutes an electrical connection. This connection can naturally be provided in different ways as well, for instance by providing an opening in an otherwise continuous insulating jacket 31, or, for instance, by providing an insulated connection in a longitudinal groove or bore in one of the plugs 36. Further, instead of balls, other rolling or sliding elements, such as for instance rollers, can be used. These constructional variants are understood to fall within the framework of the invention.

## Claims

1. A method for measuring the activity level of an animal (1) using a device (2), fitted in or on the animal, comprising a movement sensor (11;21;30;44;51) and an electronic counting circuit, wherein use is made of a movement sensor (11;21;30;44;51) whose sensitivity is dependent on the position of the movement sensor (11;21;30;44;51) characterized in that it is determined which type of movements is significant for the purpose of the measurement; that the movement sensor (11;21;30;44;51) is fitted in or on the animal (1) in such a manner that the highest sensitivity of the movement sensor (11;21;30;44;51) occurs in the spatial area (9) or in a direction in which the movements significant for the measuring purpose occur.

2. A method according to claim 1, characterized in that for achieving the selectivity for the relevant animal movement with respect to the total movement pattern (6,9), the movement sensor (11;21;30;40;51) is arranged in the device (2) fitted in or on the animal (1), in such a manner that the movement sensor (11;21;30;44;51) has maximum sensitivity to the direction of movement and/or spatial angle of the relevant animal movements (9) and minimum sensitivity to the non-relevant animal movements (6).

3. A method according to claim 1 or 2, wherein the measuring purpose is the detection of the estrous period, characterized in that use is made of the observation that during estrus, the head and the neck of the animal (1) are thrown up significantly more frequently than normally, which estrous movement, by its spatial angle (9), is clearly distinguishable from the normal eating movement (6) whereby, by contrast, the neck and the head are moved down; that the device (2) comprising the movement sensor (11;21;30;40;51) is attached to the neck of the animal (1) and that the position-dependent movement sensor is arranged in the device attached to the neck, in such a manner that while being sensitive during the estrous movement, it is insensitive during the eating movement, so that substantially the relevant estrous movements are counted and indicate the estrous period highly significantly.

4. A method according to an one of the preceding claims, characterized in that a device (2) comprising a movement sensor (11;21;30;44;51) is used, in which a wirelessly readable identification circuit, known per se, has been built in.

5. A method according to one or more of the preceding claims, characterized in that the device (2) is arranged within the body of the animal at a site suitable for the purpose with regard to movement pattern.

6. A device for measuring the activity level of an animal (1), comprising a movement sensor (11;21;30;44;51) and an electronic counting circuit, wherein the movement sensor (11;21;30;44;51) is of the type whose sensitivity is dependent on the position of the movement sensor (11;21;30;44;51) in space characterized in that the movement sensor (11;21;30;44;51) is mounted in the device (2) in such a manner that the movement sensor (11;21;30;44;51) assumes the sensitive sensitive position during movements (9) that are relevant for the measuring purpose and an insensitive position during other movements (6) if the device (2) is fitted on or in the animal (1).

7. A device according to claim 6, characterized in that the device (2) comprises a housing (48) which is attached to a collar (46) to enable fitting the device to the neck (47) of an animal.

8. A device according to claim 6 or 7, characterized in that the electronic counting circuit is wirelessly readable.

9. A device according to any one of claims 6-8, characterized in that the device (2) comprises a wirelessly readable electronic identification circuit.

10. A device according to one or more of claims 6-9, characterized in that the position-dependent movement sensor (11;21;30;44;51) comprises a tube section (32) closed at one end, which is closed off at the open end by a piezo element (33) provided with contact material (34;35) on two sides thereof, while in the thus formed tube cavity (41) an element (40) rolling linearly with some clearance is arranged, which, in case of the proper direction of movement of the sensor, butts against the piezo element (33), whereby at least a part of the kinetic energy of the rolling element (40) is converted into an electrical energy pulse, which is supplied to the electronic counter of the device (2).

11. A device according to any one of claims 6-9, characterized in that the position-dependent movement sensor (11;21;30;40;51) comprises a tube section (45) which is closed at both ends by means of a piezo element (33) provided with electrode material on both sides thereof, while in the tube section a rolling element (40) is disposed, which, depending on the position of the movement sensor, can roll to and fro between the piezo elements (33).

12. A device according to claim 10 or 11, characterized in that the rolling element (40) is a ball.

13. A device according to any one of claims 10-12, characterized in that the tube section (32;45) is a metal tube section provided with an external electrically insulating jacket (31).

14. A device according to any one of claims 10-13, characterized in that the energy pulse provided by a piezo element (33) is at least partly supplied to an energy storage means which constitutes an electrical supply source for at least the counting circuit.

15. A device according to any one of claims 6-9, characterized in that the movement sensor (11;21;30;44;51) comprises a mercury drop sensor, known per se.

16. A device according to any one of claims 6-9, characterized in that the movement sensor (11;21;30;40;51) is a ball sensor, known per se.

17. A device according to one or more of the preceding claims, characterized in that the longitudinal axis of the position-dependent sensor (11;21;30;40;51) is disposed at an angle of about 20 degrees relative to a printed circuit board (49) or the like, on which the sensor (11;21;30;44;51) and other electronic components within the casing (48) of the devices are mounted, while the device in operation is attached to the neck (47) of the animal (1) in such a manner that the printed circuit board (49) extends substantially parallel to the neck surface.

## Patentansprüche

1. Verfahren zum Messen des Aktivitätsgrades eines Tieres (1) unter Verwendung einer in oder an dem Tier angebrachten Vorrichtung (2), mit einem Bewegungssensor (11; 21; 30; 44; 51) und einer elektronischen Zählschaltung, wobei ein Bewegungssensor (11; 21; 30; 44; 51) verwendet wird, dessen Empfindlichkeit von der Position des Bewegungssensors (11; 21; 30; 44; 51) abhängt, dadurch gekennzeichnet, daß festgestellt wird, welche Art von Bewegungen für die Meßzwecke bedeutend ist; daß der Bewegungssensor (11; 21; 30; 44; 51) derart in oder an dem Tier (1) angebracht wird, daß die höchste Empfindlichkeit des Bewegungssensors (11; 21; 30; 44; 51) in dem Raum (9) oder in einer Richtung gegeben ist, in der die für die Meßzwecke bedeutenden Bewegungen stattfinden.

2. Verfahren nach Anspruch 1, dadurch gekennzeichnet, daß der Bewegungssensor (11; 21; 30; 44; 51) zum Erreichen der Selektivität für die relevante Bewegung des Tieres in bezug auf das Gesamtbewegungsmuster (6, 9) in der in oder an dem Tier (1) angebrachten Vorrichtung (2) derart angeordnet ist, daß der Bewegungssensor (11; 21; 30; 44; 51) die maximale Empfindlichkeit für die Bewegungsrichtung und/oder den Raumwinkel der relevanten Tierbewegungen (9) und die minimale Empfindlichkeit für die nicht relevanten Tierbewegungen (6) hat.

3. Verfahren nach Anspruch 1 oder 2, bei dem der Meßzweck das Erkennen der Brunstperiode ist, dadurch gekennzeichnet, daß Nutzen aus der Erkenntnis gezogen wird, daß während der Brunst der Kopf und der Hals des Tiers (1) erheblich öfter nach oben geworfen werden als normal, wobei die Brunstbewegung durch ihren Raumwinkel (9) klar von der normalen Freßbewegung (6) unterscheidbar ist, bei der, im Gegensatz dazu, der Hals und der Kopf nach unten bewegt werden; daß die den Bewegungssensor (11; 21; 30; 44; 51) aufweisende Vorrichtung (2) am Hals des Tieres (1) angebracht wird und daß der positionsabhängige Bewegungssensor in der am Hals angebrachten Vorrichtung derart angeordnet wird, daß er während der Brunstbewegung empfindlich ist, während er während der Freßbewegung unempfindlich ist, so daß im wesentlichen die relevanten Brunstbewegungen gezählt werden und die Brunstperiode mit hoher Zuverlässigkeit anzeigen.

4. Verfahren nach einem der vorhergehenden Ansprüche, dadurch gekennzeichnet, daß eine Vorrichtung (2) mit einem Bewegungssensor (11; 21; 30; 44; 51) verwendet wird, in der eine an sich bekannte drahtlos lesbare Identifizierungsschaltung eingebaut ist.

5. Verfahren nach einem oder mehreren der vorhergehenden Ansprüche, dadurch gekennzeichnet, daß die Vorrichtung (2) im Körper des Tieres an einer für die Meßzwecke in bezug auf das Bewegungsmuster geeigneten Stelle angeordnet ist.

6. Vorrichtung zum Messen des Aktivitätsgrades eines Tieres (1), mit einem Bewegungssensor (11; 21; 30; 44; 51) und einer elektronischen Zählschaltung, wobei der Bewegungssensor (11; 21; 30; 44; 51) von der Art ist, bei der die Empfindlichkeit von der räumlichen Position des Bewegungssensors (11; 21; 30; 44; 51) abhängt, dadurch gekennzeichnet, daß der Bewegungssensor (11; 21; 30; 44; 51) in der Vorrichtung (2) derart angebracht ist, daß er die empfindliche Position während Bewegungen (9) einnimmt, die für den Meßzweck relevant sind, und daß er die unempfindliche Position während anderen Bewegungen (6) einnimmt, wenn die Vorrichtung (2) an oder in dem Tier (1) vorgesehen ist.

7. Vorrichtung nach Anspruch 6, dadurch gekennzeichnet, daß die Vorrichtung (2) ein Gehäuse (48) aufweist, das an einem Halsband (46) angebracht ist, um das Anbringen der Vorrichtung am Hals (47) eines Tieres zu ermöglichen.

8. Vorrichtung nach Anspruch 6 oder 7, dadurch gekennzeichnet, daß die elektronische Zählschaltung drahtlos lesbar ist.

9. Vorrichtung nach einem der Ansprüche 6-8, dadurch gekennzeichnet, daß die Vorrichtung (2) eine drahtlos lesbare elektronische Identifizierungsschaltung aufweist.

10. Vorrichtung nach einem oder mehreren der Ansprüche 6-9, dadurch gekennzeichnet, daß der positionsabhängige Bewegungssensor (11; 21; 30; 44; 51) einen an einem Ende geschlossenen Rohrabschnitt (32), der am offenen Ende durch ein auf zwei Seiten mit einem Kontakimaterial (34, 35) versehenen Piezoelement (33), wobei in dem derart gebildeten Hohlraum (41) ein mit geringem Spiel rollendes Element (40) angeordnet ist, das bei korrekter Bewegungsrichtung des Sensors gegen das Piezoelement (33) stößt, wodurch wenigstens ein Teil der kinetischen Energie des rollenden Elements (40) in einen elektrischen Energieimpuls umgewandelt wird, der dem elektronischen Zähler der Vorrichtung (2) zugeführt wird.

11. Verfahren nach einem der Ansprüche 6-9, dadurch gekennzeichnet, daß der positionsabhängige Bewegungssensor (11; 21; 30; 44; 51) einen Rohrabschnitt (45) aufweist, der an beiden Enden durch ein auf beiden Seiten mit Elektrodenmaterial versehenes Piezoelement (33) verschlossen ist, wobei in dem Rohrabschnitt ein rollendes Element (40) angeordnet ist, das je nach Position des Bewegungssensors zwischen den Piezoelementen (33) hin und her rollen kann.

12. Vorrichtung nach Anspruch 10 oder 11, dadurch gekennzeichnet, daß das rollende Element (40) eine Kugel ist.

13. Vorrichtung nach einem der Ansprüche 10-12, dadurch gekennzeichnet, daß der Rohrabschnitt (32; 45) ein metallischer Rohrabschnitt mit einer äußeren, elektrisch isolierenden Hülle (31) ist.

14. Vorrichtung nach einem der Ansprüche 10-13, dadurch gekennzeichnet, daß der von einem Piezoelement (33) gelieferte Energieimpuls wenigstens teilweise einer Energiespeichereinrichtung zugeführt wird, welche eine elektrische Versorgungsquelle für zumindest die Zählschaltung bildet.

15. Vorrichtung nach einem der Ansprüche 6-9, dadurch gekennzeichnet, daß der Bewegungssensor (11; 21; 30; 44; 51) einen an sich bekannten Quecksilbertropfensensor aufweist.

16. Vorrichtung nach einem der Ansprüche 6-9, dadurch gekennzeichnet, daß der Bewegungssensor (11; 21; 30; 44; 51) ein an sich bekannter Kugelsensor ist.

17. Vorrichtung nach einem oder mehreren der vorhergehenden Ansprüche, dadurch gekennzeichnet, daß die Längsachse des positionsabhängigen Sensors (11; 21; 30; 44; 51) in einem Winkel von ungefähr 20° relativ zu einer Platine (49) oder dergleichen angeordnet ist, aufder der Sensor (11; 21; 30; 44; 51) und andere elektronische Bauteile im Gehäuse (48) der Vorrichtung angebracht sind, wobei die Vorrichtung im Gebrauch derart am Hals (47) des Tieres (1) angebracht ist, daß sich die Platine (49) im wesentlichen parallel zur Halsoberfläche erstreckt.

## Revendications

1. Procédé de mesure du niveau d'activité d'un animal (1) à l'aide d'un dispositif (2) installé dans ou sur l'animal, comprenant un détecteur de mouvement (11; 21; 30; 44; 51) et un circuit électronique de comptage, dans lequel on utilise un détecteur de mouvement (11; 21; 30; 44; 51) dont la sensibilité dépend de la position du détecteur de mouvement (11; 21; 30; 44; 51), caractérisé en ce qu'il détermine quel type de mouvements est significatif pour la mesure, en ce que le détecteur de mouvement (11; 21; 30; 44; 51) est installé dans ou sur l'animal (1) de telle manière que la sensibilité la plus forte du détecteur de mouvement (11; 21; 30; 44; 51) se produise dans la région spatiale (9) ou dans une direction dans laquelle se produisent les mouvements significatifs pour la mesure.

2. Procédé selon la revendication 1, caractérisé en ce que pour obtenir la sélectivité quant au mouvement significatif de l'animal par rapport au schéma total de mouvement (6, 9), le détecteur de mouvement (11; 21; 30; 44; 51) est placé dans le dispositif (2) installé dans ou sur l'animal (1) de telle manière que le détecteur de mouvement (11; 21; 30; 44; 51) ait une sensibilité maximale pour la direction de mouvement et/ou l'angle spatial des mouvements significatifs (9) de l'animal et une sensibilité minimale pour les mouvements non significatifs (6) de l'animal.

3. Procédé selon la revendication 1 ou 2, dans lequel la mesure a pour but la détection de la période d'oestrus, caractérisé en ce qu'il utilise l'observation du fait que, pendant l'oestrus, la tête et le cou de l'animal (1) sont, de manière significative, relevés beaucoup plus fréquemment que la normale, ce mouvement oestral étant clairement discernable, par son angle spatial (9), du mouvement normal d'alimentation (6) dans lequel, au contraire, la tête et le cou sont abaissés, en ce que le dispositif (2) comprenant le détecteur de mouvement (11; 21; 30; 44; 51) est fixé au cou de l'animal (1) et en ce que le détecteur de mouvement qui dépend de la position est placé dans le dispositif fixé au cou, de telle manière que, alors qu'il est sensible pendant le mouvement oestral, il est insensible pendant le mouvement d'alimentation, de sorte que les mouvements oestraux significatifs sont essentiellement comptés et indiquent la période d'oestrus de manière très significative.

4. Procédé selon l'une quelconque des précédentes revendications, caractérisé en ce qu'il utilise un dispositif (2) comprenant un détecteur de mouvement (11; 21; 30; 44; 51) dans lequel est incorporé un circuit d'identification lisible sans fil, connu per se.

5. Procédé selon une ou plusieurs des précédentes revendications, caractérisé en ce que le dispositif (2) est placé à l'intérieur du corps de l'animal, en un site approprié au but recherché compte tenu du schéma de mouvement.

6. Dispositif de mesure du niveau d'activité d'un animal (1), comprenant un détecteur de mouvement (11; 21; 30; 44; 51) et un circuit électronique de comptage, dans lequel le détecteur de mouvement (11; 21; 30; 44; 51) est d'un type dont la sensibilité dépend de la position du détecteur de mouvement (11; 21; 30; 44; 51) dans l'espace, caractérisé en ce que le détecteur de mouvement (11; 21; 30; 44; 51) est monté dans le dispositif (2) de telle manière que le détecteur de mouvement (11; 21; 30; 44; 51) prenne la position sensible pendant des mouvements (9) qui sont significatifs pour la mesure et une position insensible pendant d'autres mouvements (6) si le dispositif (2) est installé sur ou dans l'animal (1).

7. Dispositif selon la revendication 6, caractérisé en se que le dispositif (2) comprend un boîtier (48) fixé à un collier (46) pour permettre d'installer le dispositif sur le cou (47) d'un animal.

8. Dispositif selon la revendication 6 ou 7, caractérisé en ce que le circuit électronique de comptage peut être lu sans fil.

9. Dispositif selon l'une quelconque des revendications 6 à 8, caractérisé en ce que le dispositif (2) comprend un circuit électronique d'identification lisible sans fil.

10. Dispositif selon une ou plusieurs des revendications 6 à 9, caractérisé en ce que le détecteur de mouvement (11; 21; 30; 44; 51) qui dépend de la position comprend un tronçon de tube (32) fermé en une extrémité, qui est fermé en son extrémité ouverte par un élément piézo-électrique (33) doté d'un matériau de contact (34, 35) sur ses deux faces, alors que dans la cavité tubulaire ainsi formée (41) est disposé un corps (40) roulant linéairement avec un certain jeu qui, dans le cas de la direction correcte de mouvement du détecteur, bute contre l'élément piézo-électrique (33) si bien qu'une partie au moins de l'énergie cinétique du corps roulant (40) est convertie en une impulsion d'énergie électrique qui est envoyée au compteur électronique du dispositif (2).

11. Dispositif selon l'une quelconque des revendications 6 à 9, caractérisé en ce que le détecteur de mouvement (11; 21; 30; 44; 51) qui dépend de la position comprend un tronçon de tube (45) fermé en ses deux extrémités par un élément piézo-électrique (33) doté d'un matériau d'électrode sur ses deux faces, alors que dans le tronçon de tube est disposé un corps roulant (40) qui, en fonction de la position du détecteur de mouvement, peut rouler en va-et-vient entre les éléments piézo-électriques (33).

12. Dispositif selon la revendication 10 ou 11, caractérisé en ce que le corps roulant (40) est une bille.

13. Dispositif selon l'une quelconque des revendications 10 à 12, caractérisé en ce que le tronçon de tube (32; 45) est un tronçon de tube métallique doté d'une chemise extérieure (31) électro-isolante.

14. Dispositif selon l'une quelconque des revendication 10 à 13, caractérisé en cc que l'impulsion d'énergie fournie par un élément piézo-électrique (33) est envoyée au moins partiellement à un moyen de stockage d'énergie qui constitue une source d'alimentation électrique pour le circuit de comptage au moins.

15. Dispositif selon l'une quelconque des revendications 6 à 9, caractérisé en ce que le détecteur de mouvement (11; 21; 30; 44; 51) est un détecteur à goutte de mercure, connu per se.

16. Dispositif selon l'une quelconque des revendications 6 à 9, caractérisé en ce que le détecteur de mouvement (11; 21 30; 44; 51) est un détecteur à bille, connu per se.

17. Dispositif selon une ou plusieurs des précédentes revendications, caractérisé en ce que l'axe longitudinal du détecteur de mouvement (11; 21; 30; 44; 51) qui dépend de la position est disposé en faisant un angle d'environ 20 degrés par rapport à une carte de circuit imprimé (49) ou analogue sur laquelle sont montés le détecteur (11; 21; 30; 44; 51) et d'autres composants électroniques à l'intérieur du boîtier (48) du dispositif, tandis que le dispositif en fonctionnement est fixé au cou (47) de l'animal (1) de telle manière que la carte de circuit imprimé (49) s'étende sensiblement parallèlement à la surface du cou.
